(19) Europäisches Patentamt
European Patent Office
Office européen des brevets

(11) EP 4 349 577 A1

(12) **EUROPEAN PATENT APPLICATION**
published in accordance with Art. 153(4) EPC

(43) Date of publication:
**10.04.2024 Bulletin 2024/15**

(21) Application number: **22811228.0**

(22) Date of filing: **18.05.2022**

(51) International Patent Classification (IPC):
***B29D 7/01*** *(2006.01)* ***B29B 17/02*** *(2006.01)*
***B29B 17/04*** *(2006.01)*

(52) Cooperative Patent Classification (CPC):
**B29B 17/02; B29B 17/04; B29D 7/01;** Y02W 30/62

(86) International application number:
**PCT/JP2022/020733**

(87) International publication number:
**WO 2022/249956 (01.12.2022 Gazette 2022/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.05.2021 JP 2021087642**

(71) Applicant: **TOYOBO CO., LTD.**
**Osaka-shi, Osaka 530-0001 (JP)**

(72) Inventor: **NISHIO Akiko**
**Tsuruga-shi, Fukui 914-8550 (JP)**

(74) Representative: **Vossius & Partner Patentanwälte Rechtsanwälte mbB**
**Siebertstrasse 3**
**81675 München (DE)**

(54) **METHOD FOR PRODUCING RECYCLE FILM**

(57) To provide a method for producing a recycle film using a film to be discarded without reducing a recovery rate. The method for producing a recycle film, including the steps of: 1. a removing step including removing an attachable matter from a film including a functional layer; 2. a pulverizing step including pulverizing the film from which the attachable matter has been removed; 3. a chipping step including charging the obtained pulverized product into an extruder and chipping the pulverized product; and 4. a recycle substrate forming step including: charging the obtained recycle chip into an extruder of a film forming machine; forming the recycle chip into a film; and winding the film.

Fig.1

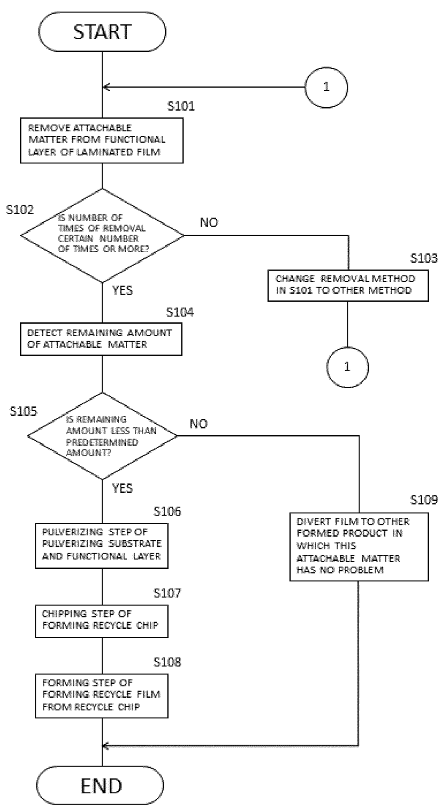


EP 4 349 577 A1

## Description

### TECHNICAL FIELD

The present invention relates to a method for producing a recycle film. More specifically, the present invention relates to a method for producing a film obtained by recycling a film including a functional layer.

### BACKGROUND ART

Films including functional layers having various functions on the surface of a substrate film made of a synthetic resin or the like are utilized in the fields of, for example, electronic components, optical components, labels, and mold release and the like. In the above films, a used film, a non-standard film, and a film damaged in a distribution process, and the like are usually discarded (hereinafter, such a film may be referred to as a film to be discarded). However, in order to effectively utilize resources, it is preferable to recycle the film to be discarded.

Examples of such a technique include Patent Document 1. In Patent Document 1, a functional layer can be efficiently removed in a short time by web-conveying a film including the functional layer wound into a roll while immersing the film in a heated base layer for a certain period of time. Furthermore, according to this recovery method, a high-quality substrate film with less impurities can be recovered.

However, in the method of Patent Document 1, it is necessary to excessively dissolve the film in order to completely remove the functional layer so as not to remain. Not only the functional layer but also a certain amount of the substrate film is dissolved, and therefore there is a problem that the recovery rate of the substrate film decreases and the cost increases. Furthermore, with the recent increase in interest in environmental problems, the substrate film has been thinned, but the thinner the substrate film is, the more remarkable the reduction in the recovery rate is.

### PRIOR ART DOCUMENT

### PATENT DOCUMENT

Patent Document 1: JP-A-2020-90094

### SUMMARY OF THE INVENTION

### PROBLEMS TO BE SOLVED BY THE INVENTION

The present invention has been devised in view of the problems of the conventional techniques. That is, an object of the present invention is to provide a method for producing a recycle film without reducing the recovery rate using the film to be discarded, such as the used film, the non-standard film, and the film damaged in the distribution process, including the functional layer.

### MEANS FOR SOLVING THE PROBLEMS

The configuration of the present invention is as follows.

[1] A method for producing a recycle film, the method comprising:

(step 1) a removing step including removing an attachable matter from at least a functional layer in a laminated film including the functional layer and a substrate;
(step 2) a pulverizing step including pulverizing at least the substrate to form a pulverized product;
(step 3) a chipping step including chipping the pulverized product obtained in the step to form a recycle chip; and
(step 4) a recycle film forming step including forming the recycle chip obtained in the step into a film and winding the film.

[2] The method for producing a recycle film according to [1], wherein the step 2 further includes pulverizing the functional layer from which the attachable matter has been removed.
[3] A method for producing a recycle film with a functional layer, the method comprising a functional layer forming step including providing a new functional layer on the recycle film obtained in [1] or [2].

The removal is preferably performed in the removing step using, for example, any one or more of a method in which an attachable matter scraped with a brush or the like is collected, a method in which an adhesive roll is attached and an attachable matter is removed at the time of peeling off, a method in which an attachable matter is removed by sucking with a vacuum, a method in which an attachable matter is scraped with a blade, a method in which an attachable matter is removed with a blade, a method in which an attachable matter is removed with high pressure water, high pressure air, and high pressure steam, a method in which an attachable matter is removed by blowing sand or dry ice, a method in which an attachable matter is adsorbed and removed with microbubbles or the like in a state where a film is immersed in a cleaning layer, a method in which an attachable matter is floated and removed with fine vibration such as ultrasonic waves, and a method in which an attachable matter is dissolved and removed with supercritical CO2. In particular, the removal is more preferably performed in the removing step using any one or more of a method in which high-pressure air is sprayed to the surface of a laminated film on which an attachable matter remains to remove the attachable matter, a method in which high-pressure water is sprayed to the surface of a laminated film on which an attachable matter remains to remove the attachable matter, and a method in which an attachable matter is adsorbed and removed with microbubbles in a state where a laminated film is immersed in a cleaning layer.

Furthermore, the removing step preferably includes removing the attachable matter from at least the functional layer in the laminated film including the functional layer and the substrate, and detecting a remaining amount of the attachable matter after the removal. A predetermined amount is, for example, 0.150% by mass with respect to 100% by mass of the removed laminated film. When the remaining amount of the attachable matter is less than a predetermined amount, the method for producing a recycle film of the present invention preferably proceeds to the pulverizing step (step 2). Meanwhile, it is preferable that when the remaining amount of the attachable matter is a predetermined amount or more, the laminated film is diverted to other formed product in the method for producing a recycle film of the present invention.

## EFFECT OF THE INVENTION

According to a method for producing a recycle film of the present invention, the recycle film can be efficiently produced while a high recovery rate of a substrate film is maintained.

## BRIEF DESCRIPTION OF THE DRAWINGS

Fig. 1 is a flowchart showing a first producing method for a recycle film according to an embodiment of the present invention.

Fig. 2 is a flowchart showing a second producing method for a recycle film according to an embodiment of the present invention.

## MODE FOR CARRYING OUT THE INVENTION

Hereinafter, the present invention will be described in detail.

The present invention is a method for producing a recycle film, including the following steps.

Fig. 1 is a flowchart showing a first producing method for the recycle film.

(Step 1) a removing step (S101 to S105) including removing an attachable matter from at least a functional layer in a laminated film including the functional layer and a substrate;

(Step 2) a pulverizing step (S106) including pulverizing at least the substrate to form a pulverized product;

(Step 3) a chipping step (S107) including chipping the pulverized product obtained in the step to form a recycle chip; and

(Step 4) a recycle film forming step (S108) including: forming the recycle chip obtained in the step into a film; and winding the film.

### (Used film with functional layer)

The laminated film including the functional layer and the substrate may be a laminated film before use or a used laminated film. In one aspect, the laminated film including the functional layer and the substrate may be a used laminated film with a functional layer (hereinafter, may be referred to as a used film with a functional layer).

The used film with a functional layer of the present invention is a film in which a functional layer is provided on at least one surface of a thermoplastic layer resin substrate film, and the substrate film is not particularly limited in terms of a material and a shape and the like.

As the material of the substrate film, polyolefin-based resins such as polyethylene, polypropylene, and polybutene, polyester-based resins such as polyethylene terephthalate, polyethylene naphthalate (PEN), polybutylene terephthalate, and polycyclohexanedimethanol-terephthalate, polyurethane-based resins such as polyester polyurethane, polyether polyurethane, polyether polyester polyurethane, polycarbonate polyurethane, and polycaprolactam polyurethane, polycarbonate-based resins, and acrylic resins and the like can be used without particular limitation.

As the substrate film, a single material may be used, a mixed system such as a polymer alloy may be used, or a structure in which a plurality of types of multiple materials are laminated may be used.

There is no particular problem in the shape of the substrate film whether the shape is a sheet or roll shape. The roll shape provides excellent production efficiency, and is generally used.

The functional layer of the used film with a functional layer of the present invention is not particularly limited, and may contain resins such as silicone-based, cyclic olefin-based, acyclic olefin-based, fluorine-based, alkyd-based, acryl-based, melamine-based, and epoxy-based resins.

In particular, when the functional layer is used as a release layer, a residual substance of an object to be released may be present on the surface of the release layer. Therefore, in the present invention, the removing step including removing the attachable matter from the film including the functional layer is important (described in detail later).

For example, a pressure-sensitive adhesive, an optical film, a ceramic green sheet, and an electrode material and the like can be shown as the object to be released, and a part of these can be present as the attachable matter according to the present invention on the laminated film. Specifically, after a ceramic green sheet and an electrode material are laminated on a laminated film including a release layer and solidified, and the ceramic laminated body is peeled off, the ceramic green sheet and the electrode material partially remain as the attachable matter on the laminated film. The electrode material is used together with the ceramic green sheet, for example, when a laminated ceramic capacitor is produced, to form internal electrodes and via electrodes of the laminated ceramic capacitor. Examples of the material of the ceramic green sheet include ferroelectric barium titanate ($BaTiO_3$), paraelectric titanium oxide ($TiO_2$), and paraelectric calcium zirconate ($CaZrO_3$). The electrode material is, for example, nickel (Ni), silver (Ag), copper (Cu), or gold (Au) or the like.

When the functional layer is used as the release layer, the release layer of the present invention is also required to have high adhesion to the object to be released. For example, a release layer for a pressure sensitive adhesive, a release layer for an optical film, and a release layer for a ceramic green sheet can be used in a step for producing an object to be released and a step for producing a device or the like using the object, and therefore it is necessary to exhibit high adhesion between these steps.

When the functional layer is used as the release layer, the release layer in the present invention may be a release layer exposed to a high temperature (for example, 60°C or higher) and/or high humidity (for example, 70% or higher) conditions, or a release layer subjected to high stretching conditions. The removing step, which includes removing an attachable matter from a film including a functional layer (for example, a release layer applied under these conditions), can increase the purity of a recycle substrate, and for example, can provide required optical properties and mechanical strength and the like.

A silicone-based compound is a compound having a silicone structure in the molecule, and examples thereof include curable silicone, a silicone graft resin, and a modified silicone resin such as an alkyl-modified silicone resin.

As the reactive curable silicone resin, an addition reaction type silicone resin, a condensation reaction type silicone resin, and an ultraviolet ray or electron beam curing type silicone resin and the like can be used.

Examples of the addition reaction type silicone resin include an addition reaction type silicone resin in which polydimethylsiloxane having a vinyl group introduced at a terminal or a side chain is reacted with hydrodienesiloxane using a platinum catalyst to be cured. At this time, it is more preferred to use a resin that can be cured at 120°C within 30 seconds because processing can be performed at a low temperature.

Examples thereof include low-temperature addition curing type silicone resins (LTC1006L, LTC1056L, LTC300B, LTC303E, LTC310, LTC314, LTC350G, LTC450A, LTC371G, LTC750A, LTC752, LTC755, LTC760A, and LTC850 and the like) and heat UV curing type silicone resins (LTC851, BY24-510, BY24-561, and BY24-562 and the like) manufactured by Dow Corning Toray Co., Ltd., and solvent addition type silicone resins (KS-774, KS-882, and X62-2825 and the like), solvent addition + UV curing type silicone resins (X62-5040, X62-5065, X62-5072T, and KS5508 and the like) and dual curing type silicone resins (X62-2835, X62-2834, and X62-1980 and the like) manufactured by Shin-Etsu Chemical Co., Ltd.

Examples of the condensation reaction type silicone resin include a silicone resin in which polydimethylsiloxane having an OH group at a terminal and polydimethylsiloxane having an H group at a terminal are subjected to a condensation reaction using an organotin catalyst to form a three-dimensional crosslinked structure.

Examples of the ultraviolet curing type silicone resin include, as the most basic type, a silicone resin utilizing the same radical reaction as that of usual silicone rubber crosslinking, a silicone resin photocured by introducing an unsaturated group, a silicone resin in which an onium salt is decomposed with ultraviolet rays to generate a strong acid, and an epoxy group is cleaved and crosslinked by the strong acid, and a silicone resin crosslinked by the addition reaction of thiol to vinylsiloxane. An electron beam can also be used instead of the ultraviolet rays. The electron beam has higher energy than that of the ultraviolet rays, and makes it possible to perform a crosslinking reaction by radicals without using an initiator as in the case of ultraviolet curing.

Examples of the resin to be used include UV-curing type silicones (X62-7028A/B, X62-7052, X62-7205, X62-7622, X62-7629, and X62-7660 and the like) manufactured by Shin-Etsu Chemical Co., Ltd., UV-curing type silicones (TPR6502, TPR6501, TPR6500, UV9300, UV9315, XS56-A2982, and UV9430 and the like) manufactured by Momentive Performance Materials Inc., and UV-curing type silicones (Silicoleases UV POLY200, POLY215, POLY201, and KF-UV265AM and the like) manufactured by Arakawa Chemical Industries, Ltd.

As the ultraviolet curing type silicone resin, acrylate-modified or glycidoxy-modified polydimethylsiloxane or the like can also be used. These modified polydimethylsiloxanes can be mixed with a polyfunctional acrylate resin or an epoxy resin or the like, and used in the presence of an initiator.

The cyclic olefin-based resin contains a cyclic olefin as a polymerization component. The cyclic olefin is a polymerizable cyclic olefin having an ethylenic double bond in the ring, and can be classified into a monocyclic olefin, a bicyclic olefin, and a tricyclic or more polycyclic olefin and the like.

Examples of the monocyclic olefin include cyclic C4-12 cycloolefins such as cyclobutene, cyclopentene, cycloheptene, and cyclooctene.

Examples of the bicyclic olefin include 2-norbornene; norbornenes having an alkyl group (C1-4 alkyl group) such as 5-methyl-2-norbornene, 5,5-dimethyl-2-norbornene, 5-ethyl-2-norbornene, and 5-butyl-2-norbornene; norbornenes having an alkenyl group such as 5-ethylidene-2-norbornene; norbornenes having an alkoxycarbonyl group such as 5-methoxycarbonyl-2-norbornene and 5-methyl-5-methoxycarbonyl-2-norbornene; norbornenes having a cyano group such as 5-cyano-2-norbornene; norbornenes having an aryl group such as 5-phenyl-2-norbornene and 5-phenyl-5-methyl-2-norbornene; octaline; and octalines having an alkyl group such as 6-ethyl-octahydronaphthalene.

Examples of the polycyclic olefin include dicyclopentadiene; derivatives such as 2,3-dihydrodicyclopentadiene, methanooctahydrofluorene, dimethanooctahydronaphthalene, dimethanocyclopentadienonaphthalene, and methanooctahydrocyclopentadienonaphthalene; derivatives having a substituent such as 6-ethyl-octahydronaphthalene; adducts of cyclopentadiene and tetrahydroindene, and trimers and tetramers of cyclopentadiene.

The acyclic olefin-based resin contains an acyclic olefin as a polymerization component. Examples of the acyclic olefin include alkenes such as ethylene, propylene, 1-butene, isobutene, 1-pentene, 2-methyl-1-butene, 3-methyl-1-butene, 1-hexene, 3-methyl-1-pentene, 4-methyl-1-pentene, 1-heptene, 1-octene, 1-decene, 1-dodecene, 1-tetradecene, 1-hexadecene, 1-octadecene, and 1-icosene.

Rubber can also be used as a resin for surface treatment. Examples thereof include copolymers such as butadiene and isoprene.

Regardless of the cyclic olefin and the acyclic olefin, the olefin-based resin may be used alone, or two or more thereof may be copolymerized.

The cyclic olefin-based resin and the acyclic olefin-based resin may partially have a hydroxyl group-modified or acid-modified site, and may be crosslinked with their functional groups using a crosslinking agent. The crosslinking agent may be appropriately selected according to a modification group, and examples thereof include isocyanate-based crosslinking agents such as aromatic diisocyanates (such as tolylene diisocyanate, 2,4-tolylene diisocyanate, 4,4'-diphenylmethane diisocyanate, xylylene diisocyanate, and polymethylene polyphenyl isocyanate), lower aliphatic diisocyanates (such as tetramethylene diisocyanate and hexamethylene diisocyanate), and alicyclic isocyanates (such as cyclopentylene diisocyanate, cyclohexylene diisocyanate, isophorone diisocyanate, and hydrogenated products of the aromatic diisocyanates), as well as melamine-based crosslinking agents such as a methyl etherified melamine resin and a butyl etherified melamine resin, and epoxy-based crosslinking agents.

The fluorine-based compound is not particularly limited as long as the fluorine-based compound is a compound having at least one of a perfluoroalkyl group and a perfluoroalkyl ether group. The fluorine-based compound may be partially modified with an acid, a hydroxyl group, or an acrylate group or the like. A crosslinking agent may be added to make crosslinking to occur at a modified site. Alternatively, a compound having at least one of a perfluoroalkyl group and a perfluoroalkyl ether group may be added to a UV curable resin, followed by polymerizing. Alternatively, a small amount of a compound having a perfluoroalkyl group having no reactive functional group may be added to a binder resin.

A release agent such as a polyolefin-based release agent, a long-chain alkyl group-containing resin-based release agent, a fluorine-based release agent, or a silicone-based release agent may be used as a release layer of a release film and as a main resin, or may be used as an additive of a binder resin.

The binder resin is not particularly limited, and for example, a UV-curable resin obtained by curing a functional group such as an acrylic group, a vinyl group, or an epoxy group by UV irradiation, a thermoplastic resin such as an ester-based resin, a urethane-based resin, an olefin-based resin, or an acrylic resin, or a thermosetting resin such as an epoxy-based resin or a melamine-based resin can also be used.

(Step of removing attachable matter from film including functional layer) (see S101 to S105 shown in Fig. 1)

In the method for removing the attachable matter from the film including the functional layer of the present invention, the film including the functional layer is provided with the functional layer on at least one surface of the substrate, and for example, the attachable matter may remain on the surface of the film after the use of the film including the functional layer.

In the above film, the used film, the non-standard film, and the film damaged in the distribution process, and the like are usually discarded. A step of removing the attachable matter from such a film to be discarded is included.

The present invention may include removing the attachable matter not only from the surface of the functional layer but also from the surface of the substrate opposite to the functional layer. The method may include a step of removing the attachable matter attached to the substrate.

The method in which the remaining attachable matter is removed is not particularly limited, and examples thereof include a method in which an attachable matter scraped with a brush or the like is collected, a method in which an adhesive roll is attached and an attachable matter is removed at the time of peeling off, a method in which an attachable matter is removed by sucking with a vacuum, a method in which an attachable matter is scraped with a blade, a method in which an attachable matter is removed with high pressure water, high pressure air, and high pressure steam, a method in which an attachable matter is removed by blowing sand or dry ice, a method in which an attachable matter is adsorbed and removed with microbubbles or the like in a state where a film is immersed in a cleaning layer (hereinafter, referred to as a microbubble method), a method in which an attachable matter is floated and removed with fine vibration such as ultrasonic waves, and a method in which an attachable matter is dissolved and removed with supercritical CO2.

These methods may be combined. The combination of these methods will be described below with reference to Fig. 1. Here, as an example, there is a scene where the removing step (S101 to S105) removes the ceramic green sheet and the residue of the electrode material (that is, the attachable matter) from the release film (that is, the laminated film). The attachable matter is removed a certain number of times in S101. The method of removal performed in S101 is also different for each time. These methods are not particularly limited, but a method capable of providing roll-to-roll processing is preferable in terms of efficiency.

As shown in Fig. 1, in a first producing method, an attachable matter is first removed from a laminated film by a first method (S101). The first method is, for example, the microbubble method described above.

When the number of times of removal is less than the certain number of times (N in S102), in the first producing method, the method of removal performed in S101 is changed (S103), and the attachable matter is removed from the laminated film by a second method (S101). The second method is, for example, a method in which high-pressure air is sprayed to the surface of the laminated film on which the attachable matter remains to remove the attachable matter, or a method in which high-pressure water is sprayed to the surface of the laminated film on which the attachable matter remains to remove the attachable matter.

In the first producing method, the processes in S101, S102, and S103 are repeated until the number of times of removal in S101 reaches a certain number of times or more. The certain number of times is, for example, once, twice, or three times, and is preferably once or twice. The certain number of times is not particularly limited, but may be determined from producing cost or the like that can be applied to recycle. The certain number of times may be determined according to the removing state of the attachable matter.

When the number of times of removal reaches the certain number of times (Y in S102), the first producing method extracts a part of the laminated film after the attachable matter is removed as a sample, and detects the remaining amount of the attachable matter (S104). The remaining amount of the attachable matter is detected by, for example, solid NMR (nuclear magnetic resonance) or ICP emission spectrometry. For example, in the case of barium titanate, the remaining amount of barium titanate is calculated from the peak of titanium in a NMR spectrum obtained from the sample. Alternatively, the remaining amount of barium titanate is determined by measuring the amounts of elemental barium and elemental titanium contained in the sample with an ICP emission spectrophotometer, determining the contents thereof in the sample, and converting the contents into the amount of barium titanate.

When the remaining amount of the attachable matter is less than the predetermined amount (Y in S105), the first producing method ends the removing step and proceeds to the pulverizing step in S106. The predetermined amount may be set in advance to an amount that does not cause a problem during recycling. The upper limit of the predetermined amount is, for example, preferably 0.150% by mass, and more preferably 0.100% by mass, with respect to 100% by mass of the extracted sample. The lower limit thereof is, for example, preferably 0.005% by mass, and more preferably 0.001% by mass, with respect to 100% by mass of the extracted sample. For example, when the remaining amount of the attachable matter is 0.005% by mass or more and 0.150% by mass or less, the first producing method ends the removing step and proceeds to the pulverizing step in S106.

In S109, the other formed product is preferably, for example, a white polyester film. The white polyester film has a single layer structure or a multilayer structure. The white polyester film having a single layer structure is a film including a void-containing layer made of a polyester resin and containing voids therein. The white polyester film having a multilayer structure is a film in which at least a first covering layer made of a polyester resin containing an inorganic pigment, a void-containing layer made of a polyester resin and containing voids therein, and a second covering layer made of a polyester resin containing an inorganic pigment are laminated in this order.

Here, the void-containing layer contains titanium dioxide, silica, barium sulfate, and calcium carbonate and the like in order to express white. Therefore, barium titanate ($BaTiO_3$) is preferably contained in the void-containing layer. In particular, from the viewpoint of film formability, surface characteristics, and post-processability, barium titanate ($BaTiO_3$) is more preferably contained in the void-containing layer in the white polyester film having a multilayer structure.

However, when Ni, which is one of the electrode materials, basically remains in a predetermined amount or more, it is difficult to divert Ni. It is not suitable to remove Ni only by washing with water. Therefore, in the case of removing Ni, which is one of the electrode materials, it is preferable to perform blowing with compressed air or suction removal in S101.

The producing method of the present invention can adopt a second producing method (Fig. 2) in which the order of the removing step (S101 to S105) of the first producing method shown in Fig. 1 is changed. As shown in Fig. 2, the second producing method is different from the first producing method in that the remaining amount of the attachable matter is detected every time the removal in S101 is performed. The other points are the same. In the second producing method, the removing step (S101 to S105) is repeated until the remaining amount of the attachable matter becomes less than a predetermined amount or the number of times of removal reaches a certain number of times or more.

In the above steps, the functional layer (for example, the release layer) may be removed together with the attachable matter, or the functional layer (for example, the release layer) may remain on the film without being removed.

In the first producing method and the second producing method, the remaining amount of the attachable matter may be detected between a chipping step (S107) and a recycle film forming step (S108). In this case, when the remaining amount of the attachable matter is less than the predetermined amount, the first producing method and the second producing method proceed to the recycle film forming step (S108). Meanwhile, when the remaining amount of the attachable matter is the predetermined amount or more, the first producing method and the second producing method proceed to a step in S109.

Here, in the present invention, the step of removing the attachable matter from the film including the functional layer includes removing the pressure-sensitive adhesive, the ceramic green sheet, and impurities and the like remaining on the surface of the functional layer. The step may be a step of removing the functional layer from the substrate. Preferably, the step of removing the attachable matter is a step of removing a functional layer, for example, a release layer or an easily slipping layer, from the substrate. By removing the functional layer, the recovery rate of the resin derived from the substrate film can be increased, and even in the recycle film after recycling, various physical properties that are not inferior to those of the substrate before recycling can be exhibited.

(Step of pulverizing film) (S106 in Fig. 1)

The present invention includes, as the step 2, a pulverizing step including pulverizing at least a substrate to form a pulverized product. In one aspect, the functional layer from which the attachable matter has been removed may be further pulverized, and then mixed with the pulverized matter of the substrate. In the present invention, at least a pulverized product obtained by pulverizing a substrate may be mixed with a functional layer pulverized product obtained by pulverizing a functional layer from which an attachable matter has been removed and the pulverized matter of the substrate. The pulverized product may be obtained in a state where the functional layer from which the attachable matter has been removed and the substrate are laminated, or after the functional layer from which the attachable matter has been removed and the substrate may be separated, and then pulverized using the same pulverizer, or may be pulverized in different steps using different pulverizers.

The film with the functional layer can be pulverized using a pulverizer such as a single-screw pulverizer, a biaxial pulverizer, a triaxial pulverizer, or a cutter mill. Specifically, rotors in which a plurality of rotary blades are circumferentially attached at regular intervals are housed in a housing to which a plurality of fixed blades are attached, and a solid material is pulverized by cutting the solid material between the tip of each rotary blade and the tip of each fixed blade rotated by the rotation of the rotor. A pulverized matter passing through a screen of a predetermined mesh is obtained. Any known method can be used as long as the material is pulverized to a predetermined size. The film may be charged into the pulverizer by continuously unwinding a film from the roll-shaped film, or by cutting and charging the roll-shaped film, or by any method that does not apply an excessive load to the pulverizer. A step of removing the attachable matter of the step 1 again may be incorporated immediately before the film is charged into the pulverizer.

The pulverized matter obtained by pulverizing in the pulverizing step is, for example, flaky, powdery, massive, or strip-shaped, but it is preferable the pulverized matter includes a flaky matter in terms of transportability and storage. The flaky pulverized matter refers to a scale or flat pulverized matter.

The size of a screen hole used in the pulverizing step is preferably 1 mm or more and 10 mm or less, and more preferably 3 mm or more and 8 mm or less. When the size of the screen hole is less than 1 mm, the pulverized product becomes powdery and is difficult to handle, and the size thereof is preferably 1 mm or more. When the size is 10 mm or more, the bulk density becomes too low, and it is difficult to control a discharge amount in an extruding step to be described later, and therefore the size is preferably 10 mm or less.

When the width of the film with the functional layer is narrow, for example, 20 mm or less, the film may be cut in a machine direction.

(Step of producing recycle chip) (S107 in Fig. 1)

The present invention includes a chipping step including chipping the pulverized product obtained in the step 2 to form a recycle chip.

In the method for producing the recycle chip, it is desirable to granulate the pulverized matter by melt-extruding. Examples of a granulating apparatus include a single screw extruder, a twin screw extruder, and a multi-screw extruder, and any known apparatus can be used. A granulation form may be any of a cylindrical shape, a pillow shape, a spherical shape, and an elliptical spherical shape.

(Step of producing film) (S108 in Fig. 1)

The present invention includes a recycle film forming step including forming the recycle chip obtained in the above step into a film and winding the obtained film.

In the present invention, as the thermoplastic resin in the present invention, a thermoplastic resin known per se can be employed as long as the thermoplastic resin can be formed into a film. A polyester-based resin, a polycarbonate-based resin, a polyamide-based resin, a polyimide-based resin, a polyvinyl-based resin, or a polyolefin-based resin can be used, and a polyester-based resin (hereinafter, simply referred to as a polyester) is particularly preferable. Among the polyesters, aromatic polyesters obtained by the polycondensation of a diol component and an aromatic dicarboxylic acid component are preferable from the viewpoint of reducing dynamic characteristics and surface defects. Examples of the aromatic dicarboxylic acid component include terephthalic acid, isophthalic acid, 2,6-naphthalenedicarboxylic acid, 4,4'-diphenyldicarboxylic acid, and 6,6'-(alkylenedioxy)di-2-naphthoic acid such as 6,6'-(ethylenedioxy)di-2-naphthoic acid. Examples of the diol component include ethylene glycol, 1,4-butanediol, 1,4-cyclohexanedimethanol, and 1,6-hexanediol. Among them, from the viewpoint of dimensional stability during processing at a high temperature, those having ethylene terephthalate or ethylene-2,6-naphthalenedicarboxylate as a main repeating unit are preferable, and those having ethylene-2,6-naphthalenedicarboxylate as a main repeating unit are particularly preferable. From the viewpoint of further improving dimensional stability against environmental changes, those obtained by copolymerizing a 6,6'-(ethylenedioxy)di-2-naphthoic acid component, a 6,6'-(trimethylenedioxy)di-2-naphthoic acid component, and a 6,6'-(butylenedioxy)di-2-naphthoic acid component and the like described in WO 2008/096612 A are also preferable.

In the polyethylene terephthalate, the content of the repeating unit of ethylene terephthalate is preferably 90 mol% or more, and more preferably 95 mol% or more. Small amounts of other dicarboxylic acid component and diol component may be copolymerized with the polyethylene terephthalate. From the viewpoint of cost, the polyethylene terephthalate is preferably produced only from terephthalic acid and ethylene glycol. Known additives such as an antioxidant, a light stabilizer, an ultraviolet absorber, and a crystallization agent may be added as long as the effects of the film of the present invention are not impaired. The polyester film is preferably a polyester film for reasons such as high bidirectional elastic modulus.

The intrinsic viscosity of the polyethylene terephthalate film is preferably 0.50 to 0.70 dl/g, and more preferably 0.52 to 0.62 dl/g. When the intrinsic viscosity is 0.50 dl/g or more, breakage is less likely to occur in a stretching step, which is preferable. Conversely, when the intrinsic viscosity is 0.70 dl/g or less, the cuttability of the polyethylene terephthalate film at the time of being cut into a predetermined product width is good and dimensional failure does not occur, which is preferable. It is preferable that the raw material is sufficiently vacuum-dried.

The method for producing the polyester film of the present invention is not particularly limited, and methods generally used conventionally can be used. For example, the polyester film can be obtained by melting the polyester with an extruder, extruding the melted product into a film form, cooling the extruded product with a rotary cooling drum to obtain an un-stretched film, and uniaxially or biaxially stretching the un-stretched film. A biaxially stretched film can be obtained by a method in which a film uniaxially stretched in a machine direction or a transverse direction is sequentially stretched biaxially in the transverse direction or the machine direction, or a method in which the un-stretched film is simultaneously stretched biaxially in the machine direction and the transverse direction.

A filter may be used between a time when the recycle chip is brought into a molten state and a time when the molten product is extruded. As the filter used for such filtration, a filter known per se may be appropriately adopted according to the level of the intended surface defect. In general, a filter having smaller 95% filtration accuracy (particle diameters of glass beads remaining on a filter without allowing 95% or more of glass beads to pass when glass beads are allowed to pass) can remove smaller foreign matters. Therefore, the 95% filtration accuracy of the filter to be used

is preferably 30 μm or less, and more preferably 20 μm or less from the viewpoint of reducing foreign matters that form minute surface defects as a problem in the present invention. Meanwhile, the smaller the 95% filtration accuracy is, the more the foreign matters can be removed, which means that the foreign matters trapped without passing through the filter is more quickly accumulated. When such foreign matters that cannot pass through the filter are accumulated, the amount of the thermoplastic resin that can pass through the filter are reduced even if the thermoplastic resin is filtered, and the amount of the thermoplastic resin extruded into a sheet becomes unstable, or the trapped foreign matters leak from the filter due to a pressure at which the filter tries to push out the thermoplastic resin. Therefore, the lower limit of the 95% filtration accuracy of the filter is not limited, but is preferably 5 μm or more, and more preferably 10 μm or more. Note that, when the foreign matters accumulated in this manner leak out, products thereafter become defective products.

Such a filter for a molten resin may also be placed between a molten state and extrusion at the time of producing a recycle chip. The filtration accuracy of the filter at this time may be appropriately selected according to the defect level in the intended resin, and it is preferable to select a filter size capable of removing aggregates and the like of the functional layer unnecessary for film physical properties without removing those required for the film physical properties, for example, particles and the like for maintaining easily slippery.

In the present invention, a stretching temperature when stretching the polyester film is preferably set to be equal to or higher than a secondary transition point (Tg) of the polyester. The polyester film is stretched in each of the machine and transverse directions preferably by once to 8 times and particularly preferably by twice to 6 times.

The polyester film preferably has a thickness of 12 to 80 μm, more preferably 12 to 50 μm, and still more preferably 15 μm to 31 μm. When the thickness of the film is 12 μm or more, the film may not be deformed by heat during the production of the film, the processing step of the release layer, and the formation of the ceramic green sheet, which is preferable. Meanwhile, when the thickness of the film is 80 μm or less, the amount of the film to be discarded after use is not extremely increased, which is preferable in reducing the environmental load, and furthermore, the material per area of the release film to be used is reduced, which is also preferable from the economic viewpoint.

The polyester film substrate may be a single layer or a multilayer of two or more layers, but is preferably a laminated polyester film including a surface layer A substantially free of inorganic particles on at least one surface. A laminated polyester film having a multilayer configuration including two or more layers preferably includes a surface layer B that can contain particles and the like on the surface opposite from the surface layer A substantially free of inorganic particles. As the laminated configuration, the layer configuration in the thickness direction may be a laminated structure such as release layer/surface layer A/surface layer B, or release layer/surface layer A/core layer C/surface layer B where a layer to which a release layer is applied is named a surface layer A, a layer located opposite from the surface layer A is named a surface layer B, and a core layer other than these layers is named a core layer C. As a matter of course, the core layer C may have a configuration including a plurality of layers. The surface layer B may contain no particles. In that case, a coating layer (D) containing particles and a binder is preferably provided on the surface layer B in order to impart slipperiness for winding the film into a roll.

In the polyester film substrate in the present invention, it is preferable that the surface layer A forming the surface to which the release layer is applied is substantially free of inorganic particles. At this time, the average area surface roughness (Sa) of the surface layer A is preferably 7 nm or less. When the Sa is 7 nm or less, pinholes and the like are less likely to occur at the time of forming an ultrathin ceramic green sheet to be laminated even in a thin film in which the film thickness of the release layer is 2.0 μm or less and further 0.5 μm or less, which is preferable. It can be said that the average area surface roughness (Sa) of the surface layer A is more preferably smaller, but the average area surface roughness (Sa) may be 0.1 nm or more. However, when an anchor coating layer to be described later or the like is provided on the surface layer A, it is preferable that the coating layer is substantially free of inorganic particles and it is preferable that the average area surface roughness (Sa) after the lamination of a coating layer falls within the range described above. In the present invention, the phrase "substantially free of inorganic particles" means a content that is 50 ppm or less, preferably 10 ppm or less, and most preferably equal to or less than the detection limit when an inorganic element is quantitatively determined by fluorescent X-ray analysis. This is because, even if the inorganic particles are not positively added into the film, contamination components derived from foreign matters, and dirt attached to raw material resins, or lines or devices in film producing steps may be peeled off and mixed into the film.

When the polyester film substrate in the present invention is a laminated film, the surface layer B forming a surface opposite to the surface layer A to which the release layer is applied preferably contains particles, and particularly preferably contains silica particles and/or calcium carbonate particles, from the viewpoint of the slipperiness of the film and the easiness of air release. As to the content of particles contained, the particles are preferably contained in the surface layer B in an amount of 500 to 15000 ppm in total. At this time, the average area surface roughness (Sa) of the film of the surface layer B is preferably within a range of 1 to 40 nm. More preferably, the average area surface roughness (Sa) is within a range of 5 to 35 nm. When the total content of the silica particles and/or the calcium carbonate particles in the surface layer B is 500 ppm or more and the Sa is 1 nm or more, air can be uniformly released when the film is wound into a roll, and the film has a good winding appearance and good flatness, which is suitable for the production of an ultrathin ceramic green sheet. When the total content of the silica particles and/or the calcium carbonate particles is 15000 ppm or less and the Sa is 40 nm or less, the aggregation of the lubricant is less likely to occur, and coarse protrusions cannot be formed, and therefore even when an ultrathin ceramic green sheet is wound after forming, defects such as pinholes are not generated in the ceramic green sheet, which is preferable.

As the particles contained in the surface layer B, silica particles and/or calcium carbonate particles are more preferably used from the viewpoint of transparency and cost. Inert inorganic particles and/or heat-resistant organic particles and the like can be used in addition to silica and/or calcium carbonate particles, and examples of other inorganic particles that can be used include alumina-silica composite oxide particles and hydroxyapatite particles. Examples of the heat-resistant organic particles include crosslinked polyacrylic particles, crosslinked polystyrene particles, and benzoguanamine-based particles. When silica particles are used, porous colloidal silica is preferable, whereas when calcium carbonate particles are used, light calcium carbonate surface-treated with a polyacrylic acid-based polymeric compound is preferable from the viewpoint of preventing the lubricant from falling off.

The average particle diameter of the particles to be added to the surface layer B is preferably 0.1 $\mu$m or more and 2.0 $\mu$m or less, and particularly preferably 0.5 $\mu$m or more and 1.0 $\mu$m or less. When the average particle diameter of the particles is 0.1 $\mu$m or more, the slipperiness of the release film is good, which is preferable. When the average particle diameter is 2.0 $\mu$m or less, there is no possibility that pinholes due to coarse particles are generated in the surface of the release layer, which is preferable. The average particle diameter of the particles can be measured by a method in which particles in the cross section of a processed film are observed with a scanning electron microscope, 100 particles are observed, and the average value thereof is taken as the average particle diameter. The shape of the particles is not particularly limited as long as the shape of the particles satisfies the object of the present invention, and spherical particles and non-spherical particles having an indefinite shape can be used. The particle diameter of the particles having an indefinite shape can be calculated as an equivalent circle diameter. The equivalent circle diameter is a value obtained by dividing the area of the observed particles by the circular constant (n), calculating the square root, and doubling the square root.

The surface layer B may contain two or more types of particles made of different materials. The same type of particles having different average particle diameters may be contained.

When the surface layer B is free of particles, it is preferable to impart easily slippery to the surface layer B with a coating layer containing particles. Means for providing the coating layer is not particularly limited, but it is preferable to provide the coating layer by a so-called in-line coating method in which coating is performed during the formation of a polyester film. When a coating layer that imparts easily slippery is provided on the surface of the polyester film on which the release layer is not laminated, the polyester film does not need to have the surface layers A and B, and may be a single-layer polyester film substantially free of inorganic particles.

The average area surface roughness (Sa) of the surface layer B is preferably 40 nm or less, more preferably 35 nm or less, and still more preferably 30 nm or less. When easily slippery is imparted to the surface of the surface layer B or the single layer polyester film on which the release layer is not laminated with the coating layer (D), the Sa of the surface is measured for the surface on which the coating layer is laminated, and is preferably in the same range as the average area surface roughness (Sa) of the surface layer B.

In the present invention, the surface roughness Sa of the surface layer A of the substrate obtained from the recycle chip is 0 nm or more and 7 nm or less, and the maximum protrusion height thereof is 50 nm or less. The surface roughness Sa of the surface layer B is 1 nm or more and 40 nm or less.

The breaking strength is 150 MPa or more and 350 MPa or less, for example, 200 MPa or more and 300 MPa or less.

The haze is 15% or less. The intrinsic viscosity of the film is 0.50 dl/g or more and 0.70 dl/g or less, for example, 0.52 dl/g or more and 0.62 dl/g or less.

(Step of providing functional layer on film) (S108 in Fig. 1)

(Applying step)

The solvent for dissolving or dispersing the functional resin is not particularly limited, but it is preferable to use an organic solvent. The use of the organic solvent makes it possible to lower the surface tension of the coating liquid, and therefore cissing or the like is less likely to occur after applying, and the smoothness of the surface of the release layer can be kept high, which is preferable.

The organic solvent used in the method for providing the functional layer of the present invention is not particularly limited, and known organic solvents can be used. Examples of the solvent usually include aromatic hydrocarbons such as benzene, toluene, and xylene, fatty acid hydrocarbons such as cyclohexane, n-hexane, and n-heptane, halogenated hydrocarbons such as perchloroethylene, ethyl acetate, methyl ethyl ketone, and methyl isobutyl ketone. The solvent is, but is not limited to, practically preferably a mixed solvent of toluene and methyl ethyl ketone in consideration of applying properties in the case of applying on the surface of the substrate film.

In the present invention, the coating liquid used for applying for forming the functional layer is not particularly limited, but preferably contains two or more types of organic solvents having different boiling points. The boiling point of the at least one organic solvent is preferably 100°C or higher. The addition of the solvent having a boiling point of 100°C or higher makes it possible to prevent bumping during drying, to level the coating film, and to improve the smoothness of the surface of the coating film after drying. The addition amount thereof is preferably about 10 to 50% by mass with respect to the entire coating liquid. Examples of the solvent having a boiling point of 100°C or higher include toluene, xylene, heoctane, cyclohexanone, methyl isobutyl ketone, and n-propyl acetate.

In the present invention, the surface tension (20°C) of the coating liquid at the time of applying the coating liquid for forming the functional layer is not particularly limited, but is preferably 30 mN/m or less. By setting the surface tension as described above, wettability after coating is improved, and the unevenness of the surface of the coating film after drying can be reduced. In order to lower the surface tension of the coating liquid, it is preferable to use an organic solvent having low surface tension as the organic solvent for forming the coating liquid. The surface tension (20°C) of the at least one organic solvent is preferably 26 mN/m or less, and more preferably 23 mN/m or less. Containing the organic solvent having surface tension (20°C) of 26 mN/m or less makes it possible to reduce appearance defects such as cissing at the time of applying, which is preferable. The addition amount thereof is preferably 20% by mass or more with respect to the entire coating liquid.

The concentration of the solid content of the release agent contained in the coating liquid is preferably 0.1% by mass or more and 10% by mass or less, and more preferably 0.2% by mass or more and 8% by mass or less. When the concentration of the solid content is 0.1% by mass or more, the coating liquid is quickly dried after applying, and therefore the components in the release agent are less likely to aggregate, which is preferable. Meanwhile, when the concentration of the solid content is 10% by mass or less, the viscosity of the coating liquid is low and the leveling property is good, and therefore the flatness after coating can be improved, which is preferable. The viscosity of the coating liquid is preferably 1 mPa·s or more and 100 mPa·s or less in terms of a coating appearance, and more preferably 2 mPa·s or more and 10 mPa·s or less. It is preferable to adjust the concentration of the solid content, and the organic solvent and the like so as to fall within this range.

In the present invention, the coating liquid for forming the functional layer is preferably filtered before applying. A filtration method is not particularly limited, and known methods can be used, but surface-type, depth-type and adsorption-type cartridge filters are preferably used. The use of a cartridge-type filter is preferable, because such a filter can be used while sending the coating liquid continuously from a tank to a coating unit, and thus can filtrate the coating liquid efficiently with high productivity. As the filtration accuracy of the filter, a filter which can remove 99% or more of substances having a size of 1 μm is preferably used, and a filter which can filtrate 99% or more of substances having a size of 0.5 μm is more preferably used. By using the filter with the above filtration accuracy, foreign matters mixed in the functional layer can be removed.

As the applying method of the coating liquid, any known applying methods can be applied. For example, conventionally known methods such as a roll coating method (such as a gravure coating method or a reverse coating method), a bar coating method (such as a wire bar), a die coating method, a spray coating method, and an air knife coating method can be utilized.

The film thickness (Wet film thickness) of the coating liquid at the time of applying is preferably 1 μm or more and 10 μm or less. When the film thickness is more than 1 μm, coating is stabilized, and therefore defects such as cissing and stripes are less likely to occur, which is preferable. When the film thickness is 10 μm or less, the coating liquid is quickly dried, and the components contained in the release layer are less likely to aggregate, which is preferable.

(Drying step)

Examples of the method for applying the coating liquid onto the substrate film and drying the coating liquid include known hot air drying and heat drying using an infrared heater or the like, but hot air drying with a high drying speed is preferable. The drying furnace can be divided into a constant rate drying step in the initial stage of drying (hereinafter, referred to as an initial drying step) and a step in which reduced-rate drying and resin curing proceed (hereinafter, referred to as a heat curing step). The initial drying step and the heat curing step may be continuous or discontinuous, but it is preferable that the initial drying step and the heat curing step are continuous because of good productivity. The respective steps are preferably distinguished by dividing the drying furnace into zones. The number of zones in each step may be any number as long as the number of zones is one or more.

In the method for providing the functional layer of the present invention, the substrate film is preferably placed in the drying furnace within 1.5 seconds after applying, more preferably within 1.0 second, and still more preferably within 0.8 seconds. The substrate film is placed in the drying furnace within 1.5 seconds after applying to start drying, and therefore the substrate film can be dried before the components contained in the release layer aggregate, and therefore deterioration in the smoothness of the surface of the release layer due to the aggregation can be prevented, which is preferable. A time from applying to placing in the drying furnace is preferably short, and the lower limit thereof is not particularly set, but the time may be 0.05 seconds or more, or 0.1 seconds or more.

The initial drying step is not particularly limited, and known drying furnaces can be used. The method of the drying furnace may be either a roll support method or a floating method, but the roll support method has a wider range in which an air volume during drying can be adjusted, and therefore the air volume and the like can be adjusted according to the type of the release layer, which is preferable.

The temperature of the initial drying step is preferably 60°C or higher and 140°C or lower, more preferably 70°C or higher and 130°C or lower, and still more preferably 80°C or higher and 120°C or lower. By setting the temperature to 60°C or higher and 140°C or lower, the amount of the organic solvent contained in the release layer after applying can be effectively dried without having poor flatness due to heat, which is preferable.

A time for passing the initial drying step is preferably 1.0 second or more and 3.0 seconds or less, more preferably 1.0 second or more and 2.5 seconds or less, and still more preferably 1.2 seconds or more and 2.5 seconds or less. When the time is 1.0 seconds or more, the organic solvent contained in the applied release layer can be sufficiently dried, which is preferable. When the time is 3.0 seconds or less, the aggregation of the components in the release layer is less likely to occur, which is preferable. By adjusting the concentration of the solid content of the coating liquid, and the type of the organic solvent and the like so that the organic solvent can be dried within the above time, it is possible to suppress deterioration in the smoothness of the release layer due to the aggregation even when the coating liquid that easily aggregates is used.

The amount of the organic solvent contained in the functional layer after passing in the initial drying step is preferably 5% by mass or less, and more preferably 2% by mass or less. By setting the amount of the organic solvent to 5% by mass or less, deterioration in the appearance of the functional layer due to bumping or the like can be prevented even when the organic solvent is heated in the heating step, which is preferable. The amount of the organic solvent in the release layer can be measured by sampling the film after the initial drying step and using gas chromatography or thermogravimetric analysis or the like, but a method in which the amount of the organic solvent is estimated using the simulation of drying can also be employed. When the amount of the organic solvent is obtained from the simulation, the measurement can be performed without stopping the step, which is preferable. The simulation is not particularly limited, but known simulation software can be used.

(Heat curing step)

The release film of the present invention preferably undergoes a heat curing step after the initial drying step. The heat curing step is not particularly limited, and a known drying furnace can be used. The drying furnace may be a roll support type or a floating type. The heat curing step may be a step continuous or discontinuous with the initial drying step, but is preferably a step continuous from the viewpoint of productivity.

The temperature of the heat curing step is preferably 80°C or higher and 180°C or lower, more preferably 90°C or higher and 160°C or lower, and most preferably 90°C or higher and 140°C or lower. When the temperature is 180°C or lower, the flatness of the film is maintained, and the possibility of causing the thickness unevenness of the ceramic green sheet is small, which is preferable. When the temperature is 140°C or lower, the film can be processed without impairing the flatness of the film, and the possibility of causing the thickness unevenness of the ceramic green sheet is further reduced, which is particularly preferable. When the temperature is 80°C or higher, curing proceeds sufficiently in the case of a thermosetting resin, which is preferable.

A passing time in the heat curing step is preferably 2 seconds or more and 30 seconds or less, and more preferably 2 seconds or more and 20 seconds or less. When the passing time is 2 seconds or more, the curing of the thermosetting resin proceeds, which is preferable. When the passing time is 30 seconds or less, the flatness of the film due to heat is not deteriorated, which is preferable.

At the end of the heat curing step, it is preferable that the temperature of the hot air is set to be equal to or lower than the glass transition temperature of the substrate film, and the actual temperature of the substrate film is set to be equal to or lower than the glass transition temperature in a flat state. When the substrate film is left from the drying furnace while the actual temperature of the substrate film is equal to or higher than the glass transition temperature, the slipperiness of the substrate film may be poor when the substrate film is in contact with the surface of the roll, and therefore not only scratches and the like but also curls and the like may occur.

The release film of the present invention is preferably wound into a roll after passing the heat curing step. A time after passing the heat curing step to the winding of the film into a roll is preferably 2 seconds or more, and more preferably 3 seconds or more. When the time is 2 seconds or more, the release film whose the temperature has increased in the heat curing step is cooled and wound into a roll, and therefore there is no possibility that the flatness of the release film is not impaired, which is preferable.

In the release film of the present invention and the method for producing the same, various treatments may be performed after the heat curing step until the release film is wound into a roll, and static elimination treatment, corona treatment, plasma treatment, ultraviolet irradiation treatment, and electron beam irradiation treatment and the like can be performed.

The recycle film may be a single layer or a laminated body including a layer containing a recycle chip. For example, the laminated body may include a layer containing a recycle chip as a core layer. The present invention includes at least the removing step, and therefore delamination can be suppressed even in the case of the laminated body.

In other aspect, the present invention provides a method for producing a recycle film with a functional layer, the method including a functional layer forming step including providing a new functional layer on the recycle film.

As described above, the film obtained by the present invention may include a functional layer on at least one surface. The functional layer may be provided on at least one surface of the film.

The functional layer is not particularly limited, and silicone-based, cyclic olefin-based, acyclic olefin-based, and fluorine-based resins can be used.

A silicone-based compound is a compound having a silicone structure in the molecule, and examples thereof include curable silicone, a silicone graft resin, and a modified silicone resin such as an alkyl-modified silicone resin.

As the reactive curable silicone resin, an addition reaction type silicone resin, a condensation reaction type silicone resin, and an ultraviolet ray or electron beam curing type silicone resin and the like can be used.

Examples of the addition reaction type silicone resin include an addition reaction type silicone resin in which polydimethylsiloxane having a vinyl group introduced at a terminal or a side chain is reacted with hydrodienesiloxane using a platinum catalyst to be cured. At this time, it is more preferred to use a resin that can be cured at 120°C within 30 seconds because processing can be performed at a low temperature. Examples thereof include low-temperature addition curing type silicone resins (LTC1006L, LTC1056L, LTC300B, LTC303E, LTC310, LTC314, LTC350G, LTC450A, LTC371G, LTC750A, LTC752, LTC755, LTC760A, and LTC850 and the like) and heat UV curing type silicone resins (LTC851, BY24-510, BY24-561, and BY24-562 and the like) manufactured by Dow Corning Toray Co., Ltd., and solvent addition type silicone resins (KS-774, KS-882, and X62-2825 and the like), solvent addition + UV curing type silicone resins (X62-5040, X62-5065, X62-5072T, and KS5508 and the like) and dual curing type silicone resins (X62-2835, X62-2834, and X62-1980 and the like) manufactured by Shin-Etsu Chemical Co., Ltd.

Examples of the condensation reaction type silicone resin include a silicone resin in which polydimethylsiloxane having an OH group at a terminal and polydimethylsiloxane having an H group at a terminal are subjected to a condensation reaction using an organotin catalyst to form a three-dimensional crosslinked structure.

Examples of the ultraviolet curing type silicone resin include, as the most basic type, a silicone resin utilizing the same radical reaction as that of usual silicone rubber crosslinking, a silicone resin photocured by introducing an unsaturated group, a silicone resin in which an onium salt is decomposed with ultraviolet rays to generate a strong acid, and an epoxy group is cleaved and crosslinked by the strong acid, and a silicone resin crosslinked by the addition reaction of thiol to vinylsiloxane. An electron beam can also be used instead of the ultraviolet rays. The electron beam has higher energy than that of the ultraviolet rays, and makes it possible to perform a crosslinking reaction by radicals without using an initiator as in the case of ultraviolet curing. Examples of the resin to be used include UV-curing type silicones (X62-7028A/B, X62-7052, X62-7205, X62-7622, X62-7629, and X62-7660 and the like) manufactured by Shin-Etsu Chemical Co., Ltd., UV-curing type silicones (TPR6502, TPR6501, TPR6500, UV9300, UV9315, XS56-A2982, and UV9430 and the like) manufactured by Momentive Performance Materials Inc., and UV-curing type silicones (Silicoleases UV POLY200, POLY215, POLY201, and KF-UV265AM and the like) manufactured by Arakawa Chemical Industries, Ltd.

As the ultraviolet curing type silicone resin, acrylate-modified or glycidoxy-modified polydimethylsiloxane or the like can also be used. These modified polydimethylsiloxanes can be mixed with a polyfunctional acrylate resin or an epoxy resin or the like, and used in the presence of an initiator.

The cyclic olefin-based resin contains a cyclic olefin as a polymerization component. The cyclic olefin is a polymerizable cyclic olefin having an ethylenic double bond in the ring, and can be classified into a monocyclic olefin, a bicyclic olefin, and a tricyclic or more polycyclic olefin and the like.

Examples of the monocyclic olefin include cyclic C4-12 cycloolefins such as cyclobutene, cyclopentene, cycloheptene, and cyclooctene.

Examples of the bicyclic olefin include 2-norbornene; norbornenes having an alkyl group (C1-4 alkyl group) such as 5-methyl-2-norbornene, 5,5-dimethyl-2-norbornene, 5-ethyl-2-norbornene, and 5-butyl-2-norbornene; norbornenes having an alkenyl group such as 5-ethylidene-2-norbornene; norbornenes having an alkoxycarbonyl group such as 5-methoxycarbonyl-2-norbornene and 5-methyl-5-methoxycarbonyl-2-norbornene; norbornenes having a cyano group such as 5-cyano-2-norbornene; norbornenes having an aryl group such as 5-phenyl-2-norbornene and 5-phenyl-5-methyl-2-norbornene; octaline; and octalines having an alkyl group such as 6-ethyl-octahydronaphthalene.

Examples of the polycyclic olefin include dicyclopentadiene; derivatives such as 2,3-dihydrodicyclopentadiene, methanooctahydrofluorene, dimethanooctahydronaphthalene, dimethanocyclopentadienonaphthalene, and methanooctahydrocyclopentadienonaphthalene; derivatives having a substituent such as 6-ethyl-octahydronaphthalene; adducts of cyclopentadiene and tetrahydroindene, and trimers and tetramers of cyclopentadiene.

The acyclic olefin-based resin contains an acyclic olefin as a polymerization component. Examples of the acyclic olefin include alkenes such as ethylene, propylene, 1-butene, isobutene, 1-pentene, 2-methyl-1-butene, 3-methyl-1-butene, 1-hexene, 3-methyl-1-pentene, 4-methyl-1-pentene, 1-heptene, 1-octene, 1-decene, 1-dodecene, 1-tetradecene, 1-hexadecene, 1-octadecene, and 1-icosene.

Rubber can also be used as a resin for surface treatment. Examples thereof include copolymers such as butadiene and isoprene.

Regardless of the cyclic olefin and the acyclic olefin, the olefin-based resin may be used alone, or two or more thereof may be copolymerized.

The cyclic olefin-based resin and the acyclic olefin-based resin may partially have a hydroxyl group-modified or acid-modified site, and may be crosslinked with their functional groups using a crosslinking agent. The crosslinking agent may be appropriately selected according to a modification group, and examples thereof include isocyanate-based crosslinking agents such as aromatic diisocyanates (such as tolylene diisocyanate, 2,4-tolylene diisocyanate, 4,4'-diphenylmethane diisocyanate, xylylene diisocyanate, and polymethylene polyphenyl isocyanate), lower aliphatic diisocyanates (such as tetramethylene diisocyanate and hexamethylene diisocyanate), and alicyclic isocyanates (such as cyclopentylene diisocyanate, cyclohexylene diisocyanate, isophorone diisocyanate, and hydrogenated products of the aromatic diisocyanates), as well as melamine-based crosslinking agents such as a methyl etherified melamine resin and a butyl etherified melamine resin, and epoxy-based crosslinking agents.

The fluorine-based compound is not particularly limited as long as the fluorine-based compound is a compound having at least one of a perfluoroalkyl group and a perfluoroalkyl ether group. The fluorine-based compound may be partially modified with an acid, a hydroxyl group, or an acrylate group or the like. A crosslinking agent may be added to make crosslinking to occur at a modified site. Alternatively, a compound having at least one of a perfluoroalkyl group and a perfluoroalkyl ether group may be added to a UV curable resin, followed by polymerizing. Alternatively, a small amount of a compound having a perfluoroalkyl group having no reactive functional group may be added to a binder resin.

A release agent such as a polyolefin-based release agent, a long-chain alkyl group-containing resin-based release agent, a fluorine-based release agent, or a silicone-based release agent may be used as a release layer of a release film and as a main resin, or may be used as an additive of a binder resin.

The binder resin is not particularly limited, and for example, a UV-curable resin obtained by curing a functional group such as an acrylic group, a vinyl group, or an epoxy group by UV irradiation, a thermoplastic resin such as an ester-based resin, a urethane-based resin, an olefin-based resin, or an acrylic resin, or a thermosetting resin such as an epoxy-based resin or a melamine-based resin can also be used.

The functional layer may include, for example, particles. The particle diameter and the like are not particularly limited. A plurality of types of particles may be included.

As a method for providing the functional layer, the functional layer may be applied outside a film producing step or during the film producing step using a reverse roll coater, a gravure coater, a rod coater, an air doctor coater, or an applying device other than these.

In one aspect, the producing method of the present invention includes using a recycle resin obtained from a film including a functional layer, obtained from at least one step including the removing step, the pulverizing step, or the chipping step, and having a recovery rate of 95% or more. In a preferred aspect, the recycle resin having a recovery rate of 95% or more is obtained through all the steps of the removing step, the pulverizing step, and the chipping step. The recycle resin obtained from all these steps can exhibit high mechanical characteristics, and can more effectively exhibit the function of the functional layer to be formed later, for example, slidability with releasability, anti-static properties, and proper mold release processability and the like. Preferably, the present invention includes using a recycle resin with a recovery rate of 97% or more, may include using a recycle resin with a recovery rate of 99%, and may include using a recycle resin with a recovery rate of 100%.

Furthermore, the present invention can include a step of producing a film including a new functional layer through the recycle substrate forming step and the functional layer forming step.

## EXAMPLES

Next, the present invention will be described using Examples and Comparative Examples. First, the evaluation methods of property values used in the present invention are presented below.

[Recovery rate]

$$\text{Recovery rate (\%)} = (\text{weight of recycle resin obtained from extrusion granulator/weight charged to pulverizer}) \times 100$$

(Preparation A of recycle resin)

A used polyester film having one surface to which a silicone-based release layer was applied was subjected to a sandblasting method to remove an attachable matter attached to the surface of the film. The film from which an attachable matter had been removed was pulverized by a 4 mm hole screen at a speed of 100 kg/hour in a uniaxial pulverizer to obtain a pulverized product of the film. The obtained pulverized product was charged into an extrusion granulator to obtain a recycle resin. A recovery rate at this time was 98%.

(Preparation B of recycle resin)

A used polyester film having one surface to which a silicone-based release layer was applied was subjected to the microbubble method described above to remove an attachable matter attached to the surface of the film. The film from which an attachable matter had been removed was pulverized by a 4 mm hole screen at a speed of 100 kg/hour in a uniaxial pulverizer to obtain a pulverized product of the film. The obtained pulverized product was charged into an extrusion granulator to obtain a recycle resin. A recovery rate at this time was 98%.

As described above, the microbubble method is a method in which a laminated film is immersed in a cleaning layer and an attachable matter is adsorbed and removed with microbubbles. Describing the microbubble method in detail, the microbubble method includes, in this order, a first roll for winding the laminated film after the ceramic laminated body is peeled off, a cleaning layer filled with, for example, water, a second roll for immersing the laminated film sent from the first roll in the cleaning layer, adsorbing an attachable matter with microbubbles, and then sending the resultant to a drying furnace and a third roll, a drying furnace for drying the laminated film sent from the second roll, and a third roll for collecting the laminated film sent from the second roll through the drying furnace. When the remaining amount of the attachable matter is less than a predetermined amount, the laminated film recovered by the third roll proceeds to a pulverizing step.

The second roll has unevenness on its surface and is placed in the cleaning layer. The second roll generates a water flow in the cleaning layer by rotating unevenness. The second roll generates microbubbles in the cleaning layer, and causes the microbubbles to collide with the surface of the laminated film on which the attachable matter remains. Thus, the microbubble method adsorbs and removes the attachable matter on the laminated film. The microbubbles are, for example, fine bubbles having a diameter of $10^{-6}$ m or more and $10^{-4}$ m or less. The microbubbles are negatively charged. Therefore, the microbubbles are not bonded to each other, and positively charged substances (dirt and the like) are adsorbed. The microbubbles reduce the surface tension of the liquid and exert a cleaning effect. Furthermore, when the microbubbles collide with the surface of the laminated film and collapse, an extremely small jet flow is generated, and enhances the cleaning effect.

In addition to the microbubble method, the following method may be performed. This method is, for example, any one or more of a method in which high-pressure air is sprayed to the surface of a laminated film on which an attachable matter remains to remove the attachable matter, and a method in which high-pressure water is sprayed to the surface of a laminated film on which an attachable matter remains to remove the attachable matter. This method is preferably performed, for example, between the second roll and the drying furnace.

(Preparation of polyethylene terephthalate pellets (PET (I))

As an esterification reactor, a continuous esterification reactor including a three-stage complete mixing tank including a stirrer, a partial condenser, a raw material charging port, and a product outlet was used. The amount of TPA (terephthalic acid) was set to 2 tons/hour, and the amount of EG (ethylene glycol) was set to 2 mol per 1 mol of TPA. The amount of antimony trioxide was set such that the amount of Sb atoms with respect to produced PET was set to 160 ppm. These slurries were continuously supplied to a first esterification reaction can of the esterification reactor, and reacted at normal pressure at 255°C for an average residence time of 4 hours. Next, the reaction product in the first esterification reaction can was continuously taken out of the system, and supplied to a second esterification reaction can. 8% by mass of EG distilled off from the first esterification reaction can with respect to produced PET was supplied into the second esterification reaction can. Furthermore, an EG solution containing magnesium acetate tetrahydrate set such that the amount of Mg atoms with respect to the produced PET was set to 65 ppm and an EG solution containing TMPA (trimethyl phosphate) set such that the amount of P atoms with respect to the produced PET was set to 40 ppm were added, and reacted at 260°C at normal pressure for an average residence time of 1 hour. Subsequently, the reaction product of the second esterification reaction can was continuously taken out of the system, and fed to a third esterification reaction can. 0.2% by mass of porous colloidal silica having an average particle diameter of 0.9 μm and subjected to dispersion treatment with the average number of treatments of 5 passes under pressure of 39 MPa (400 $kg/cm^2$) using a high pressure disperser (manufactured by Nippon Seiki Co., Ltd.), and 0.4% by mass of synthetic calcium carbonate having an average particle diameter of 0.6 μm and obtained by attaching 1% by mass of a polyacrylic acid ammonium salt per calcium carbonate were added in the forms of 10% EG slurries, and reacted at 260°C at normal pressure for an average residence time of 0.5 hours. The esterification reaction product produced in the third esterification reaction can was continuously fed to a three-stage continuous polycondensation reaction apparatus to perform polycondensation, and the polycondensation product was filtered with a filter prepared by sintering stainless steel fibers having a 95% cut diameter of 20 μm, and then subjected to ultrafiltration. Then, the filtered product was extruded into water, cooled, and then cut into a chip to obtain a PET chip having an intrinsic viscosity of 0.60 dl/g (hereinafter abbreviated as PET (I)). The content of the lubricant in the PET chip was 0.6% by mass.

(Preparation of polyethylene terephthalate pellets (PET (II))

Meanwhile, in the production of the PET chip, a PET chip having an intrinsic viscosity of 0.62 dl/g and containing no particles made of calcium carbonate and silica and the like was obtained (hereinafter abbreviated as PET (II)).

(Preparation of polyethylene terephthalate pellets (PET (III))

A PET chip (hereinafter abbreviated as PET (III)) was obtained in the same manner as in the PET (I) except that the type and content of the particles of the PET (I) were changed to 0.75% by mass of synthetic calcium carbonate having an average particle size of 0.9 μm, to which 1% by mass of a polyacrylic acid ammonium salt was attached per calcium carbonate. The content of the lubricant in the PET chip was 0.75% by mass.

(Production of laminated film (Production Example 1))

Raw materials mixed so as to satisfy PET (I)/recycle resin = 60%/40% were dried, then melted at 285°C, melted at 290°C by a separate melt extruder, subjected to two-stage filtration of a filter obtained by sintering stainless steel fibers having a 95% cut diameter of 15 μm and a filter obtained by sintering stainless steel particles having a 95% cut diameter of 15 μm, and joined in a feed block. A surface layer A (release surface side layer) was laminated on a surface layer B (opposite side layer to release surface) by the same method as described above except that raw materials were used for PET (II). The laminated product was extruded (cast) in the form of a sheet at a speed of 45 m/min, and electrostatically adhered and cooled on a casting drum at 30°C by an electrostatic adhesion method, to obtain an un-stretched polyethylene terephthalate sheet having an intrinsic viscosity of 0.56 dl/g. The layer ratio was adjusted so as to satisfy PET (I)/PET (II) = 60%/40% in the calculation of the discharge amount of each extruder. Then, this un-stretched sheet was heated with an infrared heater, and then stretched by 3.5 times in a machine direction at a roll temperature of 80°C according to the speed difference between rolls. Thereafter, the sheet was guided to a tenter, and stretched by 4.2 times in a transverse direction at 140°C. Then, heat treatment was performed at 210°C in a heat fixation zone. Thereafter, 2.3% relaxation treatment was performed at 170°C in a transverse direction to obtain a biaxially stretched polyethylene terephthalate film having a thickness of 31 μm. In the obtained film X1, Sa of the surface layer A was 2 nm, and Sa of the surface layer B was 28 nm.

(Production of laminated film X2)

A biaxially stretched polyethylene terephthalate film X2 having a thickness of 25 μm was obtained by changing the speed at the time of casting to adjust the thickness without changing the same layer configuration and stretching conditions as those of the laminated film X1. In the obtained film X2, Sa of the surface layer A was 3 nm, and Sa of the surface layer B was 29 nm.

(Production of laminated film X3)

Using PET (II) as a raw material for a surface layer A and a surface layer B, raw materials mixed so as to satisfy PET (I)/recycle resin = 60%/40% were laminated as an intermediate layer C between the surface layers A and B. The laminated product was extruded (cast) in the form of a sheet at a speed of 45 m/min, and electrostatically adhered and cooled on a casting drum at 30°C by an electrostatic adhesion method to obtain an un-stretched polyethylene terephthalate sheet having an intrinsic viscosity of 0.56 dl/g. The layer ratio was adjusted so as to satisfy surface layer A/intermediate layer C/surface layer B = 30%/40%/30% in the calculation of the discharge amount of each extruder. Subsequently, the easily slipping coating liquid was applied to one surface of a PET film with a bar coater, and then dried at 80°C for 15 seconds. The applied amount of the coating liquid after final stretching and drying was adjusted to 0.1 μm. Subsequently, using a tenter, the film was stretched by 4.0 times in a transverse direction at 150°C, and heated at 230°C for 0.5 seconds with the length of the film in the transverse direction fixed. The film was further subjected to relaxation treatment in the transverse direction by 3% at 230°C for 10 seconds to obtain an in-line coating polyester film having a thickness of 31 μm. The surface layers A and B were substantially free of particles in the film, and a coating layer containing particles was provided on the surface layer B side by in-line coating. In the obtained film X3, Sa of the surface layer A was 1 nm, and Sa of the surface layer B was 2 nm.

(Production of laminated film X4)

PET (III) and PET (II) were laminated so that the PET (III) formed a surface layer B (opposite side layer to release surface) and the PET (II) formed a surface layer A (release surface side layer). The PET (II) was used for the surface layer A, and the PET (III) was used as a raw material for the surface layer B. Raw materials mixed so as to satisfy PET (I)/recycle resin = 60%/40% were laminated as an intermediate layer C between the surface layers A and B. The laminated product was extruded (cast) into a sheet at a speed of 45 m/min, and electrostatically adhered and cooled on a casting drum at 30°C by an electrostatic adhesion method to obtain an un-stretched polyethylene terephthalate sheet having an intrinsic viscosity of 0.56 dl/g. A biaxially stretched polyethylene terephthalate film X4 having a thickness of 31 μm was obtained in the same manner as in the laminated film X1 except that the layer ratio was set to surface layer A/intermediate layer C/surface layer B = 40%/40%/20% in the calculation of the discharge amount of each extruder. In the obtained film X4, Sa of the surface layer A was 2 nm, and Sa of the surface layer B was 30 nm.

(Production of laminated film X6)

PET (III) and PET (II) were laminated so that the PET (III) formed a surface layer B (opposite side layer to release surface) and the PET (II) formed a surface layer A (release surface side layer). The PET (II) was used for the surface layer A, and the PET (III) was used as a raw material for the surface layer B. Raw materials mixed so as to satisfy PET (II)/recycle resin = 60%/40% were laminated as an intermediate layer C between the surface layers A and B. The laminated product was extruded (cast) into a sheet at a speed of 45 m/min, and electrostatically adhered and cooled on a casting drum at 30°C by an electrostatic adhesion method to obtain an un-stretched polyethylene terephthalate sheet having an intrinsic viscosity of 0.56 dl/g. A biaxially stretched polyethylene terephthalate film X6 having a thickness of 31 μm was obtained in the same manner as in the laminated film X1 except that the layer ratio was set to surface layer A/intermediate layer C/surface layer B = 40%/40%/20% in the calculation of the discharge amount of each extruder. In the obtained film X6, Sa of the surface layer A was 1 nm, and Sa of the surface layer B was 28 nm.

(Production of laminated film X7)

A PET (III)/recycle resin and PET (II) were laminated so that the PET (III)/recycle resin formed a surface layer B (opposite side layer to release surface) and the PET (II) formed a surface layer A (release surface side layer). The PET (II) was used for the surface layer A, and a raw material obtained by mixing the PET (III) and the recycle resin so as to satisfy PET (III)/recycle resin = 60%/40% was used for the surface layer B. The raw material obtained by mixing the PET (II) and the recycle resin so as to satisfy PET (II)/recycle resin = 60%/40% was laminated as an intermediate layer C between the surface layers A and B. The laminated product was extruded (cast) in the form of a sheet at a speed of 45 m/min, and electrostatically adhered and cooled on a casting drum at 30°C by an electrostatic adhesion method to obtain an un-stretched polyethylene terephthalate sheet having an intrinsic viscosity of 0.55 dl/g. A biaxially stretched polyethylene terephthalate film X7 having a thickness of 31 μm was obtained in the same manner as in the laminated film X1 except that the layer ratio was set to surface layer A/intermediate layer C/surface layer B = 40%/40%/20% in the calculation of the discharge amount of each extruder. In the obtained film X7, Sa of the surface layer A was 2 nm, and Sa of the surface layer B was 31 nm.

(Production of laminated film X8)

PET (II) was used as a raw material for a surface layer A (release surface side layer), and raw materials mixed so as to satisfy PET (III)/recycle resin = 60%/40% were laminated as a surface layer B (opposite side layer to release surface). The laminated product was extruded (cast) in the form of a sheet at a speed of 45 m/min, and electrostatically adhered and cooled on a casting drum at 30°C by an electrostatic adhesion method to obtain an un-stretched polyethylene terephthalate sheet having an intrinsic viscosity of 0.55 dl/g. A biaxially stretched polyethylene terephthalate film X8 having a thickness of 31 μm was obtained in the same manner as in the laminated film X1 except that the layer ratio was set to surface layer A/ surface layer B = 20%/80% in the calculation of the discharge amount of each extruder. In the obtained film X8, Sa of the surface layer A was 3 nm, and Sa of the surface layer B was 32 nm.

(Production of film with functional layer)

(Example 1)

100 parts by mass of a heat addition type silicone (solid content: 30% by mass, LTC752 manufactured by Dow Corning Toray Co., Ltd.), 0.5 parts by mass of a curing catalyst (SRX212 manufactured by Dow Corning Toray Co., Ltd.), and 0.5 parts by mass of an adhesion improver (SD7200 manufactured by Dow Corning Toray Co., Ltd.) were diluted with a mixed solvent obtained by mixing methyl ethyl ketone, toluene, and normal heptane at a mass ratio of 1:1:1, to adjust the solid content of the solution to 1%.

The resin solution adjusted to have a solid content of 1% was applied to a surface layer A of a laminated film X1 at a rate of 150 m/min with a gravure coater so that the thickness of the dried applied layer was 10 nm, and dried at 130°C for 60 seconds to obtain a film with a functional layer.

(Example 2)

A film was produced through the steps described in Production Example 1. That is, the film in Example 2 was a film in which a functional layer was not applied to a laminated film X1.

(Example 3)

A laminated film with a functional layer was obtained in the same manner as in Example 1 except that X2 was used as a laminated film to which a functional layer was applied.

(Example 4)

A laminated film with a functional layer was obtained in the same manner as in Example 1 except that X3 was used as a laminated film to which a functional layer was applied.

(Example 5)

A laminated film with a functional layer was obtained in the same manner as in Example 1 except that X4 was used as a laminated film to which a functional layer was applied.

(Example 6)

A laminated film with a functional layer was obtained in the same manner as in Example 1 except that X6 was used as a laminated film to which a functional layer was applied.

(Example 7)

A laminated film with a functional layer was obtained in the same manner as in Example 1 except that X7 was used as a laminated film to which a functional layer was applied.

(Example 8)

A laminated film with a functional layer was obtained in the same manner as in Example 1 except that X8 was used as a laminated film to which a functional layer was applied.

(Reference Example 1)

PET (III) and PET (II) were laminated so that the PET (III) formed a surface layer B (opposite side layer to release surface) and the PET (II) formed a surface layer A (release surface side layer). The PET (II) was used for the surface layer A, and the PET (III) was used as a raw material for the surface layer B. PET (I) was laminated as an intermediate layer C between the surface layers A and B. The laminated product was extruded (cast) into a sheet at a speed of 45 m/min, and electrostatically adhered and cooled on a casting drum at 30°C by an electrostatic adhesion method to obtain an un-stretched polyethylene terephthalate sheet having an intrinsic viscosity of 0.57 dl/g. A biaxially stretched polyethylene terephthalate film X5 having a thickness of 31 μm was obtained in the same manner as in the laminated film X1 except that the layer ratio was set to surface layer A/intermediate layer C/surface layer B = 40%/40%/20% in the calculation of the discharge amount of each extruder. In the obtained film X5, Sa of the surface layer A was 2 nm, and Sa of the surface layer B was 29 nm.

[Table 1]

| | Laminated film | Tensile strength MD/TD (MPa) | Intrinsic viscosity of film (dl/g) | Surface roughness of surface layer A (μm) | Surface roughness of surface layer B (μm) |
|---|---|---|---|---|---|
| Example 1 | X1 | 238/285 | 0.56 | 2 | 28 |
| Example 2 | X1 | 238/285 | 0.56 | 2 | 28 |
| Example 3 | X2 | 238/285 | 0.56 | 3 | 29 |
| Example 4 | X3 | 240/289 | 0.56 | 1 | 2 |
| Example 5 | X4 | 237/288 | 0.56 | 2 | 30 |
| Example 6 | X6 | 238/285 | 0.56 | 1 | 28 |
| Example 7 | X7 | 238/285 | 0.55 | 2 | 31 |
| Example 8 | X8 | 238/285 | 0.55 | 3 | 32 |
| Reference Example 1 | X5 | 244/293 | 0.57 | 2 | 29 |

INDUSTRIAL APPLICABILITY

By producing a recycle film according to a method of the present invention, the recycle film can be efficiently produced while a high recovery rate is maintained. The present invention, which can reduce raw materials derived from petroleum to be newly consumed and is advantageous in terms of the effective use of resources and cost, greatly contributes to the industry.

## Claims

**1.** A method for producing a recycle film, the method comprising:

(step 1) a removing step including removing an attachable matter from at least a functional layer in a laminated film including the functional layer and a substrate;
(step 2) a pulverizing step including pulverizing at least the substrate to form a pulverized product;
(step 3) a chipping step including chipping the pulverized product obtained in the step to form a recycle chip; and
(step 4) a recycle film forming step including forming the recycle chip obtained in the step into a film and winding the film.

**2.** The method for producing a recycle film according to claim 1, wherein the step 2 further includes pulverizing the functional layer from which the attachable matter has been removed.

**3.** A method for producing a recycle film with a functional layer, the method comprising a functional layer forming step including providing a new functional layer on the recycle film obtained in claim 1 or 2.

Fig.1

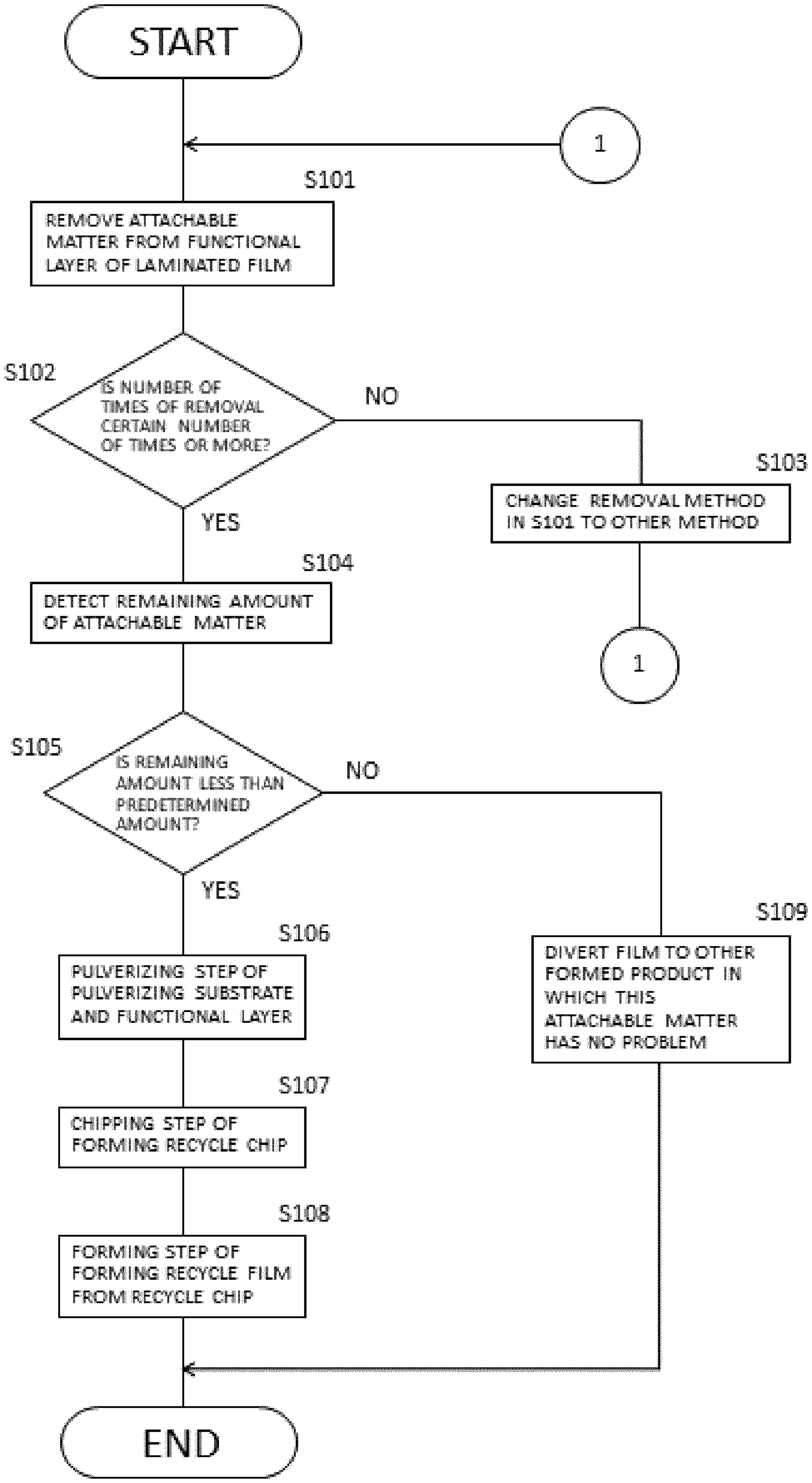
START
1
S101
REMOVE ATTACHABLE MATTER FROM FUNCTIONAL LAYER OF LAMINATED FILM
S102
IS NUMBER OF TIMES OF REMOVAL CERTAIN NUMBER OF TIMES OR MORE?
NO
S103
CHANGE REMOVAL METHOD IN S101 TO OTHER METHOD
1
YES
S104
DETECT REMAINING AMOUNT OF ATTACHABLE MATTER
S105
IS REMAINING AMOUNT LESS THAN PREDETERMINED AMOUNT?
NO
S109
DIVERT FILM TO OTHER FORMED PRODUCT IN WHICH THIS ATTACHABLE MATTER HAS NO PROBLEM
YES
S106
PULVERIZING STEP OF PULVERIZING SUBSTRATE AND FUNCTIONAL LAYER
S107
CHIPPING STEP OF FORMING RECYCLE CHIP
S108
FORMING STEP OF FORMING RECYCLE FILM FROM RECYCLE CHIP
END

Fig.2

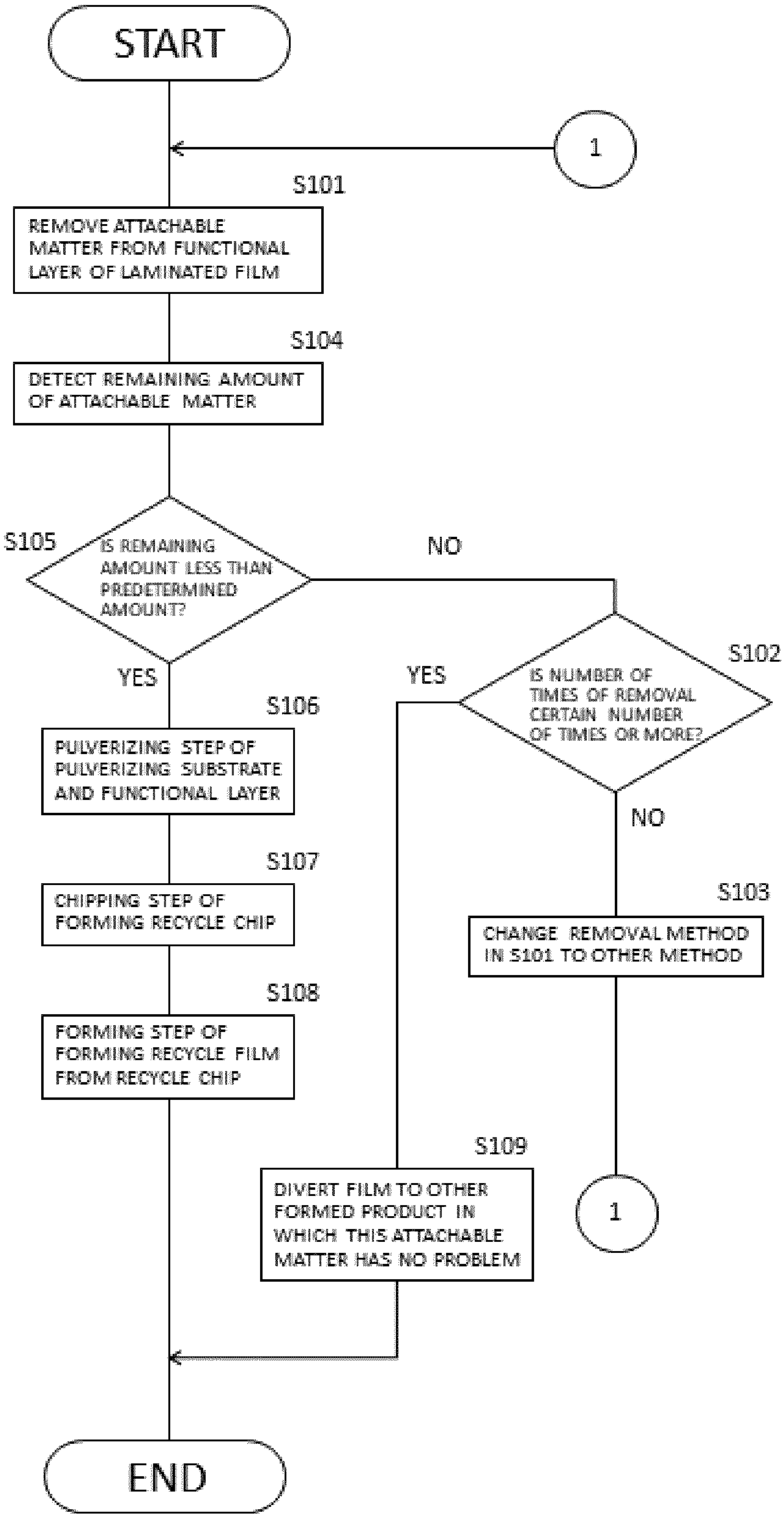
START
1
S101
REMOVE ATTACHABLE MATTER FROM FUNCTIONAL LAYER OF LAMINATED FILM
S104
DETECT REMAINING AMOUNT OF ATTACHABLE MATTER
S105
IS REMAINING AMOUNT LESS THAN PREDETERMINED AMOUNT?
NO
YES
S102
IS NUMBER OF TIMES OF REMOVAL CERTAIN NUMBER OF TIMES OR MORE?
YES
NO
S106
PULVERIZING STEP OF PULVERIZING SUBSTRATE AND FUNCTIONAL LAYER
S107
CHIPPING STEP OF FORMING RECYCLE CHIP
S103
CHANGE REMOVAL METHOD IN S101 TO OTHER METHOD
S108
FORMING STEP OF FORMING RECYCLE FILM FROM RECYCLE CHIP
S109
DIVERT FILM TO OTHER FORMED PRODUCT IN WHICH THIS ATTACHABLE MATTER HAS NO PROBLEM
1
END

## INTERNATIONAL SEARCH REPORT

International application No.
**PCT/JP2022/020733**

**A. CLASSIFICATION OF SUBJECT MATTER**

***B29D 7/01***(2006.01)i; ***B29B 17/02***(2006.01)i; ***B29B 17/04***(2006.01)i
FI: B29D7/01; B29B17/02; B29B17/04

According to International Patent Classification (IPC) or to both national classification and IPC

**B. FIELDS SEARCHED**

Minimum documentation searched (classification system followed by classification symbols)

B29D7/01; B29B17/02; B29B17/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2020-90094 A (TOYO CLOTH CO., LTD.) 11 June 2020 (2020-06-11) paragraphs [0045]-[0051] | 1-3 |
| Y | JP 2004-169005 A (TORAY IND., INC.) 17 June 2004 (2004-06-17) paragraphs [0052]-[0054] | 1-3 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 June 2022** | **12 July 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/020733**

| Patent document cited in search report | Publication date (day/month/year) | Patent family member(s) | Publication date (day/month/year) |
|---|---|---|---|
| JP 2020-90094 A | 11 June 2020 | (Family: none) | |
| JP 2004-169005 A | 17 June 2004 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020090094 A
- WO 2008096612 A